# EUROPÄISCHE PATENTSCHRIFT

(11) **EP 2 208 274 B1**
(45) Veröffentlichungstag und Bekanntmachung des Hinweises auf die Patenterteilung: **26.12.2018**
(21) Anmeldenummer: 07819833.0
(22) Anmeldetag: 07.11.2007
(51) Int. Cl.: H02J 3/26, H02J 3/18

(54) **VERFAHREN ZUR REGELUNG EINES BLINDLEISTUNGSKOMPENSATORS**
METHOD FOR REGULATING A REACTIVE POWER COMPENSATOR
PROCÉDÉ DE RÉGULATION D'UN COMPENSATEUR DE PUISSANCE RÉACTIVE

(43) Veröffentlichungstag der Anmeldung: 21.07.2010
(73) Patentinhaber: Siemens Aktiengesellschaft, 80333 München (DE)
(72) Erfinder: GERNER, Andreas, 90425 Nürnberg (DE); WERNER, Armin, 90408 Nürnberg (DE)
(86) Internationale Anmeldenummer: PCT/EP2007/009906
(87) Internationale Veröffentlichungsnummer: WO 2009/059628

(56) Entgegenhaltungen:
- EP-A- 0 471 106
- WO-A-2004/082096
- DE-A1- 3 236 071
- US-A- 4 977 492

## Beschreibung

Die Erfindung betrifft ein Verfahren zur Regelung eines Blindleistungskompensators, der an eine mehrere Phasen aufweisende Wechselspannungsleitung angeschlossen ist, bei dem für jede Phase eine an dieser abfallende Istspannung erfasst und aus den Istspannungen ein Gegensystemistanteil berechnet wird und bei dem ein Regelkreis den Gegensystemistanteil unterdrückt, wobei eine Rückführungsschleife den Grad der Unterdrückung des Gegensystemistanteils mit Hilfe von Stellparametern bestimmt.

Ein solches Verfahren ist aus der ständigen Praxis im Bereich der Energieübertragung und -verteilung bereits bekannt und wird beispielsweise im Zusammenhang mit der Regelung eines so genannten Static Var Compensators (SVC) angewendet. Ein SVC dient in der Regel zur Stabilisierung und Symmetrierung der Spannungen in einem Energieverteilungsnetz. Hierzu werden Induktivitäten oder Kapazitäten in Parallelschaltung mit dem Netz mittels zweckmäßiger Schalteinheiten verbunden. Als Schalteinheiten sind insbesondere Halbleiterschalter vorgesehen, die den Stromfluss über die besagte Induktivität oder Kapazität verhindern oder ermöglichen. Mit Hilfe eines SVCs ist es somit möglich, durch die Symmetrierung der Phasenspannungen ein so genanntes Gegensystem zu unterdrücken.

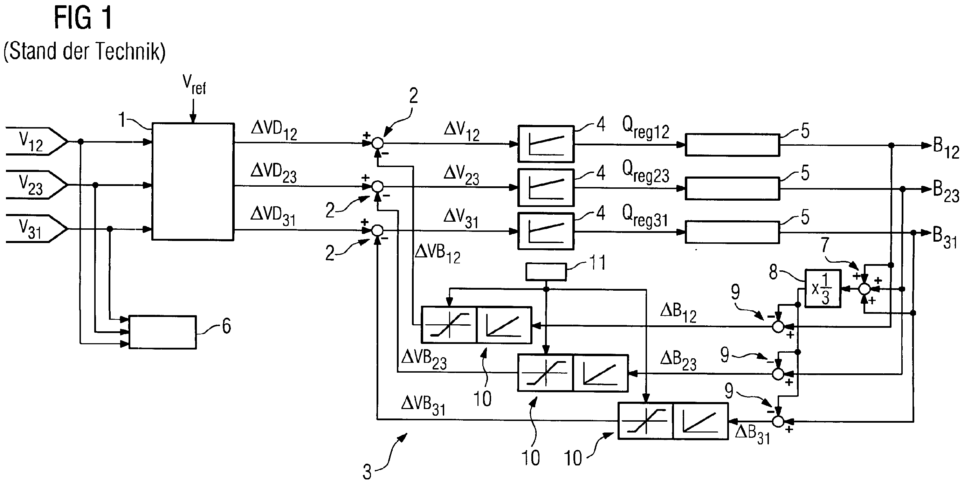

Figur 1 zeigt schematisch ein Verfahren zur Regelung eines SVCs, mit dem ein Gegensystem unterdrückt oder teilweise zugelassen werden kann. Hierzu erfassen Spannungssensoren die an den Phasen abfallende Spannung und stellen Phasenspannungsmesswerte v_{1,2}, v_{2,3} und v_{3,1} bereit. Die dabei gewonnenen Phasenspannungsmesswerte v_{1,2}, v_{2,3} und v_{3,1} werden einer Differenzspannungserzeugungseinheit 1 zugeführt, die an ihrem Ausgang Differenzspannungen ΔvD₁₂, ΔvD₂₃ und ΔvD₃₁ bereitstellt.

Die Differenzspannungen können auf unterschiedliche Weise berechnet werden. Nur beispielhaft sei die Abweichung des Phasenspannungsmesswertes von einem über alle drei Phasen gemittelten Mittelwert der Phasenspannung genannt. Darüber hinaus wird der Differenzspannungserzeugungseinheit 1 eine Referenzspannung v_{ref} zugeführt, die bei der Ermittlung der Differenzspannungen ebenfalls eine Rolle spielt. So wird beispielsweise der Mittelwert der Phasenspannungsmesswerte mit der Referenzspannung verglichen, wobei die dabei berechnete Differenz allen Phasen aufgeschaltet wird. Die auf diese Weise gewonnenen Differenzspannungen werden jeweils Differenzbildnern 2 zugeführt, die an ihrem Ausgang die Differenz zwischen den Differenzspannungen ΔvD und dem Ausgang einer Rückführungsschleife 3 unter Gewinnung von korrigierten Differenzspannungen Δv₁₂, Δv₂₃ und Δv₃₁ bereitstellen. Auf die Rückführungsschleife 3 wird später noch genauer eingegangen.

Die korrigierten Differenzspannungen Δv werden jeweils einem Spannungsregler 4 zugeführt, der an seinem Ausgang Blindleistungsregelgrößen Q_{reg12}, Q_{reg23} und Q_{reg31} bereitstellt, die von jeweils einer Umrechungseinheit 5 in Suszeptanzwerte B₁₂, B₂₃ und B₃₁ umgerechnet werden. Die Suszeptanzwerte B₁₂, B₂₃ und B₃₁ oder die Blindleistungsregelgröße Q_{reg} dienen als Regelgröße des SVCs. Ist der Ausgang der Rückführungsschleife 3 für alle Phasen gleich null, bewirkt die Regelung, dass ein Spannungsabfall in der Phase 1 und konstante Spannungen in Phase 2 und 3 einen negativen Differenzspannungswert ΔDv₁₂ im Gefolge hat. Der negative Differenzspannungswert ΔDv₁₂ erzeugt an der Ausgangsseite des Spannungsreglers 4 eine größere Blindleistungsregelgröße Q_{reg1,2} als für die restlichen Phasen 2 und 3. Durch den SVC kommt es im Vergleich zu den restlichen Phasen zu einer - je nach Arbeitspunkt des SVCs - erhöhten Einspeisung von kapazitiver oder verringerter Einspeisung von induktiver Blindleistung, so dass der Spannungsabfall in der Phase 1 ausgeglichen wird. Auf diese Weise wird das Gegensystem unterdrückt. Das Gegensystem wird von einer Gegensystemberechnungseinheit 6, die ebenfalls mit den Phasenspannungsmesswerten v₁₂, v₂₃ und v₃₁ versorgt wird, berechnet und einem Nutzer zur Anzeige gebracht.

Ein solches Regelungsverfahren ohne die Wirkung der Rückführungsschleife 3 ist jedoch fehleranfällig. Kommt es beispielsweise zum Totalausfall einer einzelnen Phase der angeschlossenen Energieverteilungsleitung, ist die Unterdrückung des Gegensystems nicht mehr möglich, ohne die Energieübertragung vollständig zu unterbrechen. Die Rückführungsschleife 3 dient daher zur Begrenzung der Unterdrückung des Gegensystems. Hierzu wird mit Hilfe eines Addierers 7 und eines Quotientenbildners 8 zunächst der Mittelwert der Suszeptanzwerte gebildet, wobei mit Hilfe des Differenzbildners 9 Differenzsuszeptanzwerte ΔB₁₂, ΔB₂₃ und ΔB₃₁ ermittelt werden. Diese Differenzsuszeptanzwerte werden anschließend jeweils einem Rückführungsregler 10 zugeführt, der an seinem Ausgang Rückführungsdifferenzspannungen ΔvB₁₂, ΔvB₂₃ und ΔvB₃₁ bereitstellt, die jeweils dem Differenzbildner 2 als zweite Eingangsgröße zugeführt werden. Dabei ist jeder Rückführungsregler 10 nach oben und nach unten durch eine obere und eine untere Begrenzung, die mittels einer Begrenzungsvorgabeeinheit 11 festgelegt werden, begrenzt. Durch das Einstellen der oberen und unteren Begrenzungen, die für alle Phasen im Übrigen gleich sind, kann der Grad der Unterdrückung des Gegensystems eingestellt werden.

Werden beispielsweise die Grenzen jedes Rückführungsreglers 10 auf null eingestellt, ist die Wirkung der Rückführungsschleife 3 aufgehoben. Die Unterdrückung des Gegensystems wird ungehindert und unbeschränkt zugelassen. Werden die Grenzen jedes Reglers hingegen auf unendlich eingestellt, erfolgt gar keine Unterdrückung des Gegensystems mehr. Das Gegensystem wird so wie es ist zugelassen. Eine Symmetrierung der Phasenspannungen erfolgt nicht.

Dem vorbekannten Regelungsverfahren haftet der Nachteil an, dass die oberen und unteren Begrenzungen der Rückführungsregler 10 von Hand, also beispielsweise von dem Personal einer Leitstelle, eingegeben werden müssen. Dies ist jedoch aufwändig und kann insbesondere bei Unachtsamkeiten des Bedienpersonals zu Schäden führen.

Aus der EP 0 471 106 A1 ist ein Verfahren und eine Vorrichtung zur Symmetrierung eines Wechselspannungsnetzes, beispielsweise eines Bordnetzes eines Flugzeugs, bekannt. Hier werden die Spannungen der drei Phasen des Bordnetzes durch Messsensoren erfasst und mittels Koordinatentransformationen in nicht rotierende stillstehende Zeigergrößen einmal für das Mit- sowie für das Gegensystem überführt. Die anschließende Regelung unterdrückt das Gegensystem, so dass in dem Bordnetz eine symmetrische Spannungsverteilung bereitgestellt ist.

Aufgabe der Erfindung ist es daher, ein Verfahren der eingangs genannten Art bereitzustellen, mit dem eine vom Bedienpersonal weitgehend unabhängige Einstellung des maximal zulässigen Gegensystems ermöglicht ist.

Die Erfindung löst diese Aufgabe dadurch, dass eine Komparatoreinheit den Gegensystemistanteil mit einem Gegensystem sollanteil vergleicht und die Stellparameter in Abhängigkeit des Vergleichs festlegt.

Erfindungsgemäß ist eine Komparatoreinheit bereitgestellt, mit dem eine selbsttätige Einstellung des maximal zulässigen Gegensystems ermöglicht ist. Anhand einer internen in der Komparatoreinheit implementierten Logik werden Stellparameter bestimmt, mit denen der Grad der Unterdrückung des Gegensystems oder mit anderen Worten des Gegensystemistanteils festgelegt werden kann. Selbst bei einem Spannungseinfall in nur einer Phase der Energieübertragungsleitung, mit welcher der Static Var Compensator verbunden ist, ist auf diese Weise ein stabiles Ansteuern des Static Var Compensators im Rahmen der Erfindung ermöglicht, ohne dass Bedienpersonal zum Überwachen des Static Var Compensators erforderlich ist.

Vorteilhafterweise wird für jede Istspannung ein Differenzsignal ΔvD erzeugt, das einer Abweichung der Istspannung von der- oder denjenigen anderer Phasen entspricht. Jedem Differenzsignal wird ein Ausgangssignal einer Gesamtspannungsrückführungsschleife unter Gewinnung eines Reglereingangssignals aufgeschaltet. Die Reglereingangssignale werden an den Eingang eines Reglers des Regelkreises gelegt, dessen Ausgangssignale die Wirkungsweise des Blindleistungskompensators bestimmen. Der Blindleistungskompensator ist im Rahmen der Erfindung beispielsweise ein Static Var Compensator, der bereits eingangs beschrieben wurde.

Zweckmäßigerweise sind die Ausgangssignale des Reglers Q_{reg}, B die Istwerteingangssignale der Rückführungsschleife.

Vorteilhafterweise überführt die Rückführungsschleife die Istwerteingangssignale mittels eines Rückführungsreglers in die besagten Ausgangssignale der Rückführungsschleife, wobei die Stellparameter den Rückführungsregler begrenzen.

Gemäß einer diesbezüglichen zweckmäßigen Weiterentwicklung bilden die Stellparameter obere und untere Begrenzungen für den Rückführungsregler. Durch die obere und untere Begrenzung ist eine besonders einfache und kostengünstige Einstellmöglichkeit gegeben.

Gemäß einer bevorzugten Weiterentwicklung des erfindungsgemäßen Verfahrens stellt die Komparatoreinheit Stellparameter bereit, die eine Unterdrückung des Gegensystems verhindern, wenn der Gegensystemanteil kleiner als der Gegensystemsollanteil ist. Ist also eine gewisse unsymmetrische Spannungsverteilung zulässig, aber die Unsymmetrie des Energieverteilungsnetzes ist geringer, werden beispielsweise maximale obere und untere Begrenzungen als Stellparameter für den Rückführungsregler bereitgestellt. Mit den maximalen Begrenzungen wird das Gegensystem zugelassen.

Entspricht der Gegensystemistanteil hingegen dem Gegensystemsollanteil, stellt die Komparatoreinheit vorteilhafterweise Stellparameter bereit, mit denen der Regelkreis einer Abnahme des Gegensystemistanteils im Energieverteilungsnetz nicht entgegenwirkt und gleichzeitig eine Erhöhung des Gegensystemistanteils über den Gegensystemsollanteil hinaus unterbunden ist. Dies erfolgt durch zweckmäßige Wahl der oberen und unteren Begrenzungen des Rückführungsreglers. Erreicht der Gegensystemistanteil im Rahmen der zulässigen Abweichungen den Gegensystemsollanteil wird beispielsweise der aktuelle Integratorwert des Reglers je nach Vorzeichen als obere beziehungsweise untere Grenze verwendet, wobei der jeweils andere Grenzwert gleich null gesetzt wird. Ist der Integratorwert negativ, wird dieser als untere Grenze verwendet und umgekehrt.

Ist der Gegensystemistanteil größer als der Gegensystemsollanteil, verändert die Komparatoreinheit zweckmäßigerweise die Stellparameter, so dass der Gegensystemistanteil so lange verringert wird, bis dieser kleiner oder gleich dem Gegensystemsollanteil ist. Gemäß einer zweckmäßigen Ausgestaltung wird der aktuelle Integratorwert des Rückführungsreglers beispielsweise einmalig gespeichert und je nach seinem Vorzeichen als obere und untere Begrenzung für den Rückführungsregler verwendet. Wieder wird die jeweils andere Grenze auf null gestellt. Der höhere Grenzwert wird anschließend so lange verringert, also auf null zu bewegt, bis der Gegensystemistwert dem Sollwert entspricht.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile oder Verfahrensschritte verweisen und wobei
- Figur 1: eine schematische Darstellung eines Reglungsverfahrens für einen Blindleistungskompensator oder einen Static Var Compensator und
- Figur 2: ein erfindungsgemäßes Verfahren in schematischer Darstellung verdeutlichen.

Figur 1 wurde bereits weiter oben im Zusammenhang mit dem Stand der Technik beschrieben, so dass hierauf an dieser Stelle nicht näher eingegangen zu werden braucht.

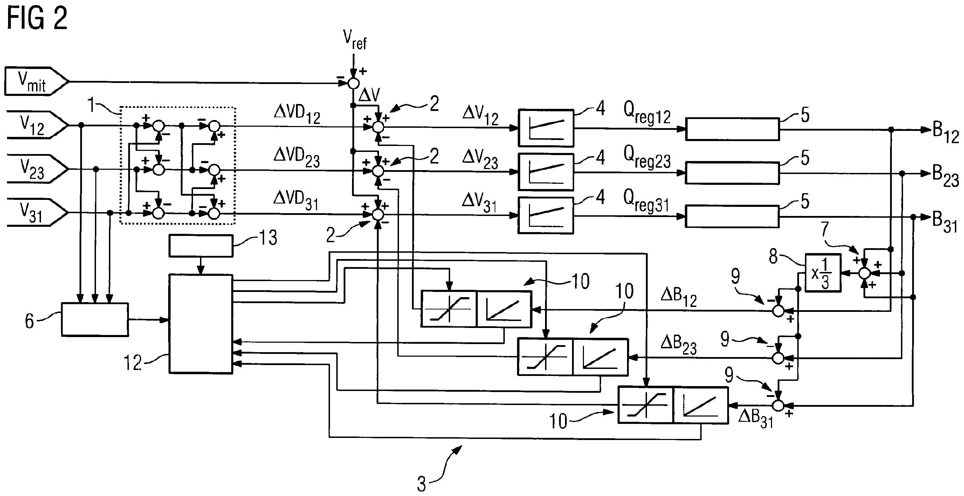

Figur 2 zeigt ein Ausführungsbeispiel gemäß der vorliegenden Erfindung schematisch. In Figur 2 ist im Gegensatz zu Figur 1 die Differenzspannungserzeugungseinheit 1 im Detail gezeigt. Die beispielhafte Differenzspannungserzeugungseinheit 1 umfasst für jede der angeschlossenen Phasen zwei in Reihe geschaltete Differenzbildner. Die Differenzspannung ΔvD₁₂ berechnet sich daher gemäß ΔvD₁₂ = v₃₁+v₂₃-2v₁₂. Für ΔVD₂₃ gilt: ΔvD₂₃ = v₁₂+v₃₁-2v₂₃. Entsprechendes gilt für ΔvD₃₁: ΔvD₃₁ = v₂₃+v₁₂-2v₃₁. Darüber hinaus wird ein über alle Phasen ermittelter Mittelspannungsmittelpunktmesswert vₘᵢₜ von einer Referenzspannung v_{ref} mittels eines Differenzbildners unter Gewinnung einer Gesamtspannungsabweichung Δv abgezogen. Diese Gesamtspannungsabweichung Δv wird jeder Phase einzeln aufgeschaltet, so dass die Spannung insgesamt konstant gehalten wird. Es ergibt sich am Ausgang des jeweiligen Differenzbildners 2 wieder die korrigierte Differenzspannung Δv₁₂, Δv₂₃ und Δv₃₁ für jede Phase.

Im Gegensatz zu dem in Figur 1 gezeigten Verfahren ist gemäß dem gezeigten Ausführungsbeispiel der Erfindung in Figur 2 jeder Rückführungsregler 10 mit einer Komparatoreinheit 12 verbunden, so dass die Komparatoreinheit 12 mit dem jeweiligen Integratorwert des Rückführungsreglers 10 als Eingangssignal versorgt wird. Ein weiteres Eingangssignal für die Komparatoreinheit 12 ist der Ausgang der Gegensystemberechnungseinheit 6, die einen Gegensystemistanteil zur Verfügung stellt. Ferner ist in Figur 2 eine Gegensystemsollwertauswahleinheit 13 erkennbar, welche die Komparatoreinheit 12 mit einem Gegensystemsollanteil versorgt. Die Komparatoreinheit 12 vergleicht den Gegensystemistanteil mit dem Gegensystemsollanteil und legt in Abhängigkeit des Vergleichs die oberen und unteren Begrenzungen des Rückführungsreglers 10 fest, wie durch von der Komparatoreinheit 12 zum Rückführungsregler 10 führende Pfeile angedeutet ist.

Ist der Gegensystemistanteil kleiner als der Gegensystemsollanteil, werden die oberen und unteren Begrenzungen des jeweiligen Rückführungsreglers 10 auf die jeweils möglichen Maximalwerte gesetzt. Die Maximalwerte werden der Komparatoreinheit 12 von dem Anwender des Verfahrens zweckmäßige als Parameter zur Verfügung gestellt, so dass das Gegensystem komplett zugelassen wird und eine Ausbildung eines Gegensystems ermöglicht ist. Ist der Gegensystemistanteil hingegen im Rahmen der Toleranzbereiche gleich dem Gegensystemsollanteil, wird hingegen der aktuelle Integratorwert einmalig gespeichert. Ist der Integratorwert negativ, wird dieser als untere Begrenzung des Rückführungsreglers 10 verwendet. Ist der Integratorwert hingegen positiv, wird dieser als obere Begrenzung des Rückführungsreglers eingesetzt. Die jeweils andere Begrenzung wird auf null gesetzt. Eine Erhöhung des Gegensystemistanteils ist somit verhindert, während sich die Integratoren des Rückführungsreglers 10 gegen null bewegen können, wenn sich der Gegensystemistanteil im Energieverteilungsnetz verringert. Der SVC selbst erzeugt also keine Netzunsymmetrie.

Ist der Gegensystemistanteil hingegen größer als der Gegensystemsollanteil, werden die aktuellen Integratorwerte wieder einmalig gespeichert und vorzeichenabhängig als obere beziehungsweise untere Grenze verwendet, wobei die jeweils andere Grenze auf null gesetzt wird. Anschließend wird mit der Verringerung der nicht auf null eingestellten Begrenzungen begonnen, bis die Istanteile wieder unterhalb oder im Bereich der Sollwerte liegen.

## Patentansprüche

1. Verfahren zur Regelung eines Blindleistungskompensators, der an eine mehrere Phasen aufweisende Wechselspannungsleitung angeschlossen ist, bei dem für jede Phase eine an dieser abfallende Istspannung (v₁₂, v₂₃ und v₃₁) erfasst und aus den Istspannungen (v₁₂, v₂₃ und v₃₁) ein Gegensystemistanteil berechnet wird und bei dem ein Regelkreis den Gegensystemistanteil unterdrückt, wobei eine Rückführungsschleife (3) den Grad der Unterdrückung des Gegensystemistanteils mit Hilfe von Stellparametern bestimmt,
**dadurch gekennzeichnet, dass**
- eine Komparatoreinheit (12) den Gegensystemistanteil mit einem Gegensystemsollanteil vergleicht und die Stellparameter in Abhängigkeit des Vergleichs festlegt,
- die Rückführungsschleife (3) zur Begrenzung der Unterdrückung des Gegensystems dient,
- die Rückführungsschleife (3) Rückführungsregler (10) aufweist, die jeweils einen Integrator aufweisen und nach oben und nach unten durch eine obere Begrenzung und eine untere Begrenzung begrenzt sind,
- durch Einstellen der oberen und unteren Begrenzungen der Grad der Unterdrückung des Gegensystems eingestellt wird,
- die Stellparameter die oberen und unteren Begrenzungen für die Rückführungsregler (10) bilden, und
- wenn der Gegensystemistanteil größer als der Gegensystemsollanteil wird, die aktuellen Integratorwerte der Rückführungsregler (10) vorzeichenabhängig als obere beziehungsweise untere Begrenzung verwendet werden, wobei die jeweils andere Begrenzung auf null gesetzt wird.

2. Verfahren nach Anspruch 1,
**dadurch gekennzeichnet, dass**
für jede Istspannung (v₁₂, v₂₃ und v₃₁) ein Differenzsignal (ΔvD₁₂) erzeugt wird, das einer Abweichung der Istspannung von wenigstens einer Istspannung (v₁₂, v₂₃ und v₃₁) einer anderen Phase entspricht, jedem Differenzsignal (ΔvD₁₂, ΔvD₂₃ und ΔvD₃₁) ein Ausgangssignal (ΔvB₁₂, ΔvB₂₃ und ΔvB₃₁) der Rückführungsschleife (3) unter Gewinnung eines Reglereingangssignals (Δv₁₂, Δv₂₃ und Δv₃₁) aufgeschaltet wird, die Regeleingangssignale (Δv₁₂, Δv₂₃ und Δv₃₁) an den Eingang eines Reglers (4) des Regelkreises gelegt werden, dessen Ausgangssignale (Q_{reg}) die Wirkungsweise des Blindleistungskompensators bestimmen.

3. Verfahren nach Anspruch 2,
**dadurch gekennzeichnet, dass**
die Ausgangssignale (Q_{reg},B) des Reglers (4) die Istwerteingangssignale der Rückführungsschleife (3) sind.

4. Verfahren nach Anspruch 3,
**dadurch gekennzeichnet, dass**
die Rückführungsschleife (3) die Istwerteingangssignale (Q_{reg},B) mittels des Rückführungsreglers (10) in die besagten Ausgangssignale (ΔvB) der Rückführungsschleife (3) überführt, wobei die Stellparameter den Rückführungsregler (10) begrenzen.

5. Verfahren nach einem der vorhergehenden Ansprüche,
**dadurch gekennzeichnet, dass**
wenn der Gegensystemistanteil kleiner als der Gegensystemsollanteil ist, die Komparatoreinheit Stellparameter bereitstellt, die eine Unterdrückung des Gegensystems verhindern.

6. Verfahren nach einem der vorhergehenden Ansprüche,
**dadurch gekennzeichnet, dass**
wenn der Gegensystemsistanteil dem Gegensystemsollanteil entspricht, die Komparatoreinheit Stellparameter bereitstellt, mit denen der Reglerkreis einer Abnahme des Gegensystemsistanteils nicht entgegenwirkt und gleichzeitig eine Erhöhung des Gegensystemsistanteils über den Gegensystemsollanteil hinaus unterbunden ist.

7. Verfahren nach einem der vorhergehenden Ansprüche,
**dadurch gekennzeichnet, dass**
wenn der Gegensystemistanteil größer ist als der Gegensystemsollanteil, die Komparatoreinheit die Stellparameter verändert, so dass der Gegensystemsistanteil so lange verringert wird, bis dieser kleiner oder gleich dem Gegensystemsollanteil ist.

## Claims

1. Method for controlling a VAr compensator which is connected to an AC voltage which has a plurality of phases, in which an actual voltage (v₁₂, v₂₃ and v₃₁), which is dropped across each phase, is determined for each phase, and a negative phase-sequence system actual component is calculated from the actual voltages (v₁₂, v₂₃ and v₃₁), and in which a control loop suppresses the negative phase-sequence system actual component, wherein a feedback loop (3) determines the degree of suppression of the negative phase-sequence system actual component with the aid of control parameters, **characterized in that**
- a comparator unit (12) compares the negative phase-sequence system actual component with a negative phase-sequence system nominal component, and defines the control parameters as a function of the comparison,
- the feedback loop (3) serves for limiting the suppression of the negative phase-sequence system,
- the feedback loop (3) has feedback regulators (10) which each have an integrator and are limited upwards and downwards by an upper limit and a lower limit,
- the degree of suppression of the negative phase-sequence system is adjusted by adjusting the upper and lower limits,
- the control parameters form the upper and lower limits for the feedback regulators (10), and
- if the negative phase-system actual component becomes greater than the negative phase-sequence system nominal component, the current integrator values of the feedback regulators (10) are used depending on the mathematical sign, as upper or respectively lower limit, with the respective other limit being set to zero.

2. Method according to Claim 1,
**characterized in that**
a difference signal (ΔvD₁₂) is produced for each actual voltage (v₁₂, v₂₃ and v₃₁) and corresponds to a discrepancy between the actual voltage and at least one actual voltage (v₁₂, v₂₃ and v₃₁) in another phase, an output signal (ΔvB₁₂, ΔvB₂₃ and ΔvB₃₁) from the feedback loop (3) is applied to each difference signal (ΔvD₁₂, ΔvD₂₃ and ΔvD₃₁), resulting in a regulator input signal (Δv₁₂, Δv₂₃ and Δv₃₁), the regulator input signals (Δv₁₂, Δv₂₃ and Δv₃₁) are applied to the input of a regulator (4) for the control loop, whose output signals (Q_{reg}) determine the method of operation of the VAr compensator.

3. Method according to Claim 2,
**characterized in that**
the output signals (Q_{reg},B) of the regulator (4) are the actual value input signals of the feedback loop (3).

4. Method according to Claim 3,
**characterized in that**
the feedback loop (3) converts the actual value input signals (Q_{reg},B) to said output signals (ΔvB) of the feedback loop (3) by means of the feedback regulator (10), with the control parameters limiting the feedback regulator (10).

5. Method according to one of the preceding claims,
**characterized in that**,
when the negative phase-sequence system actual component is less than the negative phase-sequence system nominal component, the comparator unit produces control parameters which prevent suppression of the negative phase-sequence system.

6. Method according to one of the preceding claims,
**characterized in that**,
when the negative phase-sequence system actual component corresponds to the negative phase-sequence system nominal component, the comparator unit produces control parameters by means of which the control loop does not counteract any decrease in the negative phase-sequence system actual component, and, at the same time, an increase in the negative phase-sequence system actual component beyond the negative phase-sequence system nominal component is suppressed.

7. Method according to one of the preceding claims,
**characterized in that**,
when the negative phase-sequence system actual component is greater than the negative phase-sequence system nominal component, the comparator unit changes the control parameters such that the negative phase-sequence system actual component is reduced until it is less than or equal to the negative phase-sequence system nominal component.

## Revendications

1. Procédé de régulation d'un compensateur de puissance réactive, qui est raccordé à une ligne de tension alternative ayant plusieurs phases, dans lequel on relève, pour chaque phase, une tension (v₁₂, v₂₃ et v₃₁) réelle y chutant et, à partir des tensions (v12, v23 et v31) réelles, on calcule une proportion réelle de système inverse et dans lequel un circuit de régulation supprime la proportion réelle de système inverse, dans lequel une boucle (3) de réaction détermine le degré de suppression de la proportion réelle de système inverse à l'aide de paramètres de réglage,
**caractérisé en ce que**
- une unité (12) de comparateur compare la proportion réelle de système inverse à une proportion de consigne de système inverse et fixe les paramètres de réglage en fonction de la comparaison,
- la boucle (3) de réaction sert à limiter la suppression du système inverse,
- la boucle (3) de réaction a des régleurs (10) de réaction, qui ont chacun un intégrateur et sont limités vers le haut et vers le bas par une limite supérieure et une limite inférieure,
- en réglant les limites supérieures et inférieures, on règle le degré de la suppression du système inverse,
- les paramètres de réglage forment les limites supérieures et inférieures pour les régleurs (10) de réaction et
- si la proportion réelle de système inverse est plus grande que la proportion de consigne de système inverse, on utilise les valeurs d'intégrateur instantanées du régleur (10) de réaction en fonction du signe, comme limite supérieure, respectivement, inférieure, l'autre limite étant mise à zéro.

2. Procédé suivant la revendication 1,
**caractérisé en ce que**
l'on produit, pour chaque tension (v₁₂, v₂₃ et v₃₁) réelle, un signal (ΔvD₁₂) de différence, qui correspond à un écart de la tension réelle à au moins une tension (v₁₂, v₂₃ et V₃₁) réelle d'une autre phase, on règle, en fonction de chaque signal (ΔvD₁₂, ΔvD₂₃ et ΔvD₃₁) de différence, un signal (ΔvB₁₂, ΔvB₂₃ et ΔvB₃₁) de sortie de la boucle (3) de réaction, en obtenant un signal (ΔV₁₂, Δv₂₃ et Δv₃₁) d'entrée de régleur, on applique les signaux (Δv₁₂, Δv₂₃ et Δv₃₁) d'entrée de régleur à l'entrée d'un régleur (4) du circuit de réglage, dont les signaux (Q_{reg}) de sortie déterminent le mode d'action du compensateur de puissance réactive.

3. Procédé suivant la revendication 2,
**caractérisé en ce que**
les signaux (Q_{reg}, B) de sortie du régleur (4) sont les signaux d'entrée de valeur réelle de la boucle (3) de réaction.

4. Procédé suivant la revendication 3,
**caractérisé en ce que**
la boucle (3) de réaction transforme les signaux (Q_{reg}, B) d'entrée de valeur réelle au moyen du régleur (10) de réaction, en lesdits signaux (ΔvB) de sortie de la boucle (3) de réaction, les paramètres de réglage limitant le régleur (10) de réaction.

5. Procédé suivant l'une des revendications précédentes,
**caractérisé en ce que**,
lorsque la proportion réelle de système inverse est plus petite que la proportion de consigne de système inverse, l'unité de comparaison met à disposition des paramètres de réglage, qui empêchent une suppression du système inverse.

6. Procédé suivant l'une des revendications précédentes,
**caractérisé en ce que**,
lorsque la proportion réelle de système inverse correspond à la proportion de consigne de système inverse, l'unité de comparaison met à disposition des paramètres de réglage, par lesquels le circuit de régleur ne s'oppose pas à la diminution de la proportion réelle de système inverse et supprime, en même temps, une augmentation de la proportion réelle de système inverse au-delà de la proportion de consigne de système inverse.

7. Procédé suivant l'une des revendications précédentes,
**caractérisé en ce que**,
lorsque la proportion réelle de système inverse est plus grande que la proportion de consigne de système inverse, l'unité de comparaison modifie les paramètres de réglage, de manière à diminuer la proportion réelle de système inverse jusqu'à ce que celle ci soit inférieure ou égale à la proportion de consigne de système inverse.
